# EUROPÄISCHE PATENTSCHRIFT

(11) **EP 1 632 495 B1**
(45) Veröffentlichungstag und Bekanntmachung des Hinweises auf die Patenterteilung: **25.02.2009**
(21) Anmeldenummer: 05019165.9
(22) Anmeldetag: 02.09.2005
(51) Int. Cl.: C07F 1/02

(54) **Methyllithium/Lithiumbromid enthaltendes Synthesemittel und Verfahren zu dessen Herstellung**
Synthesis agent containing methyllithium/lithium bromide and processes for its preparation
Agent de synthèse contenant méthyllithium/bromure de lithium et procédés pour son préparation

(30) Priorität: 06.09.2004 DE 102004043501
(43) Veröffentlichungstag der Anmeldung: 08.03.2006
(73) Patentinhaber: Chemetall GmbH, 60487 Frankfurt am Main (DE)
(72) Erfinder: Emmel, Ute, 65929 Frankfurt/M (DE); Rittmeyer, Peter, Dr., 65843 Sulzbach/Taunus (DE); Wietelmann, Ulrich, Dr., 61381 Friedrichsdorf (DE); Aul, Rainer, Dr., 63110 Rodgau (DE)
(74) Vertreter: Uppena, Franz

(56) Entgegenhaltungen:
- EP-A- 0 753 520

## Beschreibung

Die Erfindung betrifft ein Methyllithium/Lithiumbromid enthaltendes Synthesemittel und ein Verfahren zu dessen Herstellung.

Methyllithium wird benutzt als Reagens bei der Herstellung pharmazeutischer Erzeugnisse, wie Vitaminen oder Steroiden, und bei speziellen Synthesestufen, wie Reaktionen vom Carbentyp zur Herstellung von Allenen und Alkoxycyclopropanen, Methylierungsreaktionen zur Herstellung von Alkenyllithium- und steroidalen Alkenylverbindungen, Reduktionsreaktionen verschiedener Übergangsmetallhalogenide, wie PdCl₂ zu Pd(0), der Herstellung von Methyllithium-Cupraten für 1,4-konjugierte Additionen oder zur Herstellung von anderen metallorganischen Verbindungen, wie Me₂M_{g}, MeTi(NEt₂)₃, Me₃Al, Me₃Al, Me₃As oder Me₃Ga.

Methyllithium ist kommerziell erhältlich als ca. 5 %-ige Lösung in Diethylether oder als ca. 6 %-ige Lösung in Diethylether, welche ca. 10 % Lithiumbromid als komplexbildenden Stabilisator enthält. Diese Handelsformen von Methyllithium in Diethylether sind bedingt durch den niedrigen Flammpunkt von Diethylether nur von eingeschränkter Nutzbarkeit. Andere etherische Lösungen von Methyllithium haben keine kommerzielle Bedeutung, da zum einen die Konzentration an Methyllithium in ihnen sehr gering ist (ca. 3 Gew.-%) und zum anderen die Stabilität ungenügend ist (z.B. in THF oder Glycolethern). In Kohlenwasserstoffen und Aromaten hingegen ist Methyllithium unlöslich. Eine gewisse Löslichkeit in Aromaten wird erreicht, wenn man den Methyllithium-THF-Komplex einsetzt (max. 3,74 Gew.-%). So sind aus den Dokumenten EP-A 02 285 374 und US-A-5,171,467 Alkyllithium-Verbindungen in aromatischen Kohlenwasserstoffen bekannt, die durch einen Gehalt an einer Lewis-Base, wie Tetrahydrofuran, und Lithiumhalogeniden stabilisiert sind. Da diese Lösungen aber zum Zerfall durch Metallierung des aromatischen Kohlenwasserstoffs neigen, werden Dialkylmagnesium-Verbindungen zugesetzt. Der Gehalt an aktiven Lithium-Verbindungen sinkt dadurch auf 2,6 Gew.-%, und die Reaktivität wird durch die Anwesenheit von Dialkylmagnesium-Verbindungen beeinflusst.

Weiterhin sind aus der EP 753 520 gelöstes Methyllithium enthaltende Synthesemittel bekannt, die Methyllithium in einem Lösemittel der allgemeinen Formel: 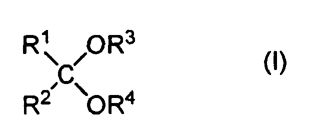 enthalten, wobei R¹ und R² unabhängig voneinander = H, Methyl (Me) oder Ethyl (Et) und R³ und R⁴ Methyl oder Ethyl sind.

Diese Synthesemittel werden hergestellt, indem
a) Lithium-Pulver oder Lithium-Granulat in einem Lösemittel der allgemeinen Formel I dispergiert und Methylhalogenid zudosiert wird,
b) die Reaktionstemperatur im Bereich von 0 bis 60 °C gehalten wird und
c) das entstandene Lithiumhalogenid von der Methyllithium-Lösung abgetrennt wird.

Die EP 753 520 sieht weiter vor, bis zu 10 % Lithiumbromid oder Lithiumiodid zuzusetzen, um ein spezielles, für stereochemische Reaktionen geeignetes Synthesemittel zu erhalten. Im Beispiel 3 wird eine 7,2 % MeLi und 8,25 % Lithiumbromid enthaltende Lösung beschrieben. Diese Zusammensetzung entspricht einem molaren Verhältnis LiBr : MeLi von ca. 0,29 : 1.

Es ist bekannt, dass einige organische Reaktionen stark durch den Salzgehalt, genauer gesagt, das Molverhältnis zwischen Lithiumorganyl und Lithiumsalz in ihrer Selektivität beeinflusst werden.

Solche Effekte sind zusammenfassend von A. Loupy und B. Tchoubar ("Salt Effects in Organic and Organometallic Chemistry", VCH, Weinheim 1992) oder C. Fehr (Angew. Chem. 1996, 108, 2726-2748) beschrieben. Beispielsweise wird der Enantiomerenüberschuss (ee) bei der asymmetrischen Protonierung prochiraler Enolate durch Lithiumsalzadditive beeinflusst (A.Yanagisawa et al., Synlett 1998, 174-176):

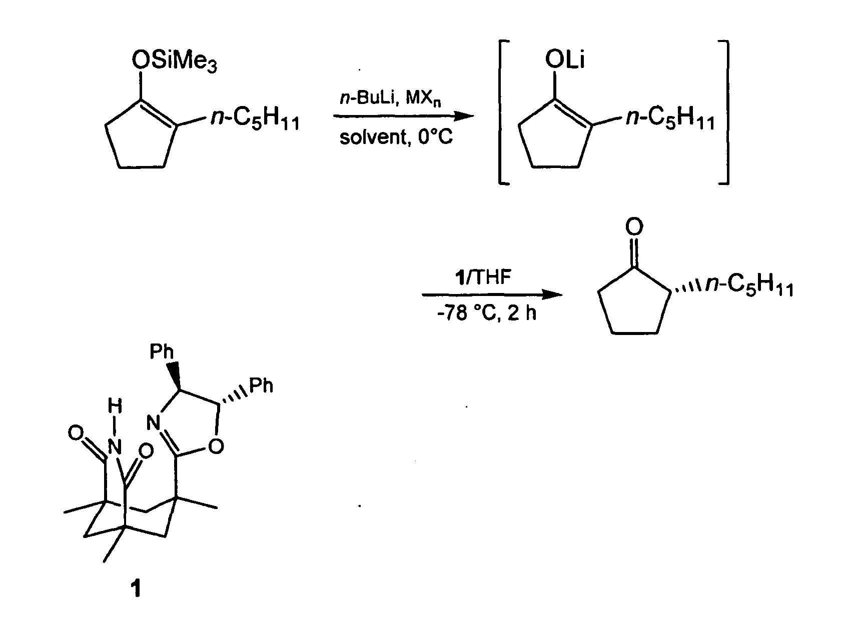

| MXₙ (equiv) | solvent^{a} | % ee^{b} |
|---|---|---|
| -- | THF | 63 |
| -- | Et₂O | 74 |
| LiBr (1) | THF | 79 |
| LiBr (1) | Et₂O | 83 |
| LiBr (2) | THF | 79 |
| LiBr (2) | Et₂O | 85 |
| LiBr (5) | THF | 77 |
| LiBr (5) | Et₂O | 90 |
| LiBr (10) | THF | 78 |
| LiBr (10) | Et₂O | 88 |

| | | |
|---|---|---|
| ^{a)} a small amount of hexane (ca. 6 %) was contained in each solvent; ^{b)} determined by GC analysis with chiral column (Chiraldex^{™} B-TA, astec). (*R*)-Enriched ketone 6 was obtained in each case | | |

Die Aufgabe der vorliegenden Erfindung ist es, die Nachteile des Standes der Technik zu überwinden und insbesondere hochselektiv wirkende Methyllithium enthaltende Synthesemischungen in einem besser handhabbaren Lösemittel als Diethylether bereitzustellen.

Die Aufgabe wird gelöst durch ein Methyllithium und Lithiumbromid enthaltendes Synthesemittel, bei dem in einem Lösemittel der allgemeinen Formel (1) 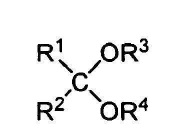 mit R¹, R² unabhängig voneinander = H, Methyl (Me) oder Ethyl (Et), sowie R³, R⁴ = Me oder Et,

MeLi und LiBr gelöst sind, wobei das Molverhältnis von LiBr zu MeLi mindestens 0,7 und maximal 1,5 beträgt und die Methyllithiumkonzentration mindestens 4 Gew.-% beträgt.

In einer bevorzugten Ausführungsform beträgt das Molverhältnis von LiBr zu MeLi mindestens 0,8, besonders bevorzugt mindestens 1,0.

Das Synthesemittel kann 1 bis 40 Gew.-% eines oder mehrerer aromatischer Lösemittel enthalten, wobei Benzol, Toluol, Ethylbenzol, Xylol oder Cumol bevorzugt sind. Das Synthesemittel kann aber auch kein aromatisches Lösemittel enthalten.

Das Methyllithium und Lithiumbromid enthaltende Synthesemittel kann hergestellt werden durch Umsetzung eines Methylhalogenids (M-Hal, mit Hal = Cl oder Br) mit Lithiummetall, wobei die Umsetzung in einem Lösemittel der Formel (I) durchgeführt wird und das Lithiumbromid dem erhaltenen Reaktionsgemisch zugegeben wird und/oder bereits vor der Umsetzung dem Lösemittel zugegeben wird. Das heißt, dass für den Fall, dass die zur Erreichung einer LiBr: MeLi-Stöchiometrie notwendige LiBr-Menge nicht bereits mit dem Reaktionslösemittel eingetragen wurde, das LiBr in der benötigten Menge nach der Reaktion und vor oder nach der Abtrennung der unlöslichen Bestandteile (nicht umgesetztes Lithiummetall und unlösliches Lithiumhalogenid) zugegeben wird.

In einer bevorzugten Ausführungsform der vorliegenden Erfindung wird als Methylhalogenid Methylbromid verwendet. Es wurde überraschend gefunden, dass das bei der Synthesereaktion gemäß

H₃C-Br + 2 Li → H₃C-Li + LiBr (1)

entstehende Lithiumbromid selbst bei hohen Konzentrationen (> 10 Gew.-%) und im Molverhältnis LiBr : MeLi >> 0,29 in Lösung bleibt, so dass es nach Beendigung der Umsetzung gemäß obiger Gleichung auch gar nicht abfiltriert werden kann, wie in der EP 753 520 beschrieben.

Diese Verfahrensvariante hat den Vorteil, dass die Filtration im Vergleich zum Verfahren, bei dem Methylchlorid eingesetzt wird, wesentlich vereinfacht ist. Der Filterkuchen besteht hier nur aus überschüssigem Lithiummetall und geringen Mengen eines unlöslichen, weißen Feststoffes, der erhöhte Mengen an Restbase enthält, mithin inaktives Produkt darstellt. Die relativ aufwändige Waschung des Filterrückstandes entfällt somit.

In einer weiteren bevorzugten Ausführungsform wird das Lithiummetall in relativ grobstückiger Abformung, beispielsweise als Granulat mit Kantenlängen von mindestens 1 mm eingesetzt. Bevorzugt ist eine maximale Kantenlänge der Lithiumstücke von 4 mm. Besonders bevorzugt hat das eingesetzte Lithiumgranulat Kantenlängen von 2 bis 3 mm.

Bevorzugt wird bei der Reaktion von Lithiummetall mit dem Methylhalogenid das Methylchlorid oder Methylbromid in einem Zeitraum von 1 bis 8 Stunden zudosiert. Die Reaktionstemperatur wird bevorzugt im Bereich von 0 bis 50 °C gehalten.

Wegen der dem Lithiummetall eigentümlichen geringen Dichte von 0,54 g/ml schwimmt der nach Reaktionsende übrigbleibende Metallüberschuss auf, und die nur leicht trübe Reaktionslösung kann vom verbleibenden Lithiummetall abgetrennt werden. Das Abtrennen kann z.B. durch Abdekantieren per Tauchrohr erfolgen. Eine andere Möglichkeit, das unveränderte Lithium von der Reaktionslösung abzutrennen besteht darin, die Lösung über ein Sieb, beispielsweise mit einer Maschenweite von 0,5 bis 1 mm ablaufen zu lassen und das unveränderte Lithium mit Frischlösemittel in den Synthesereaktor zurückzuspülen.

Auf diese Art und Weise braucht das metallische Lithium nicht - wie beim Standardverfahren üblich - mit Wasser oder dergleichen zerstört zu werden, was unter anderem wegen der dabei erfolgenden Gasentwicklung gemäß

2 Li + 2 H₂O → LiOH + H₂↑

gefährlich ist. Es kann statt dessen beispielsweise für einen Folgeansatz zur Herstellung von weiterem Methyllithium verwendet werden. So können Methyllithium-Lithiumbromid-haltige Lösungen (Synthesemittel) mit einer sehr hohen LiBr-Konzentration besonders einfach und ökonomisch erhalten werden.

Der Gegenstand der Erfindung wird anhand der folgenden Beispiele näher erläutert:

### Beispiel 1: Herstellung einer 5,5 %-igen Methyllithiumlösung mit einem LiBr : MeLi-Verhältnis von 0,78 : 1

In einer Argon-gefüllten Handschuhbox wurden 29,6 g wasserfreies Lithiumbromid in eine 250-ml-lsogewindeflasche gefüllt. Dann wurden 93 g einer lithiumbromidfreien 8,0 %-igen Methyllithiumlösung in 1,1-Diethoxymethan (DEM) hinzugegeben. Die Mischung wurde 3 Stunden magnetisch gerührt; dann war das Lithiumbromid größtenteils in Lösung gegangen.

Nach 24-stündigem Stehenlassen hatte sich eine klare Lösung über einer dünnen Feststoffzone gebildet. Die klare Phase wurde beprobt und wie folgt analysiert:

### Analyse (mmol/g):

| Lithium (FES) | Bromid (argentometrisch) | Chlorid (argentometrisch) | Gesamtbase (acidimetrisch) |
|---|---|---|---|
| 4,50 | 1,95 | 0,09 | 2,51 |

Daraus errechnet sich folgende Lösungszusammensetzung:

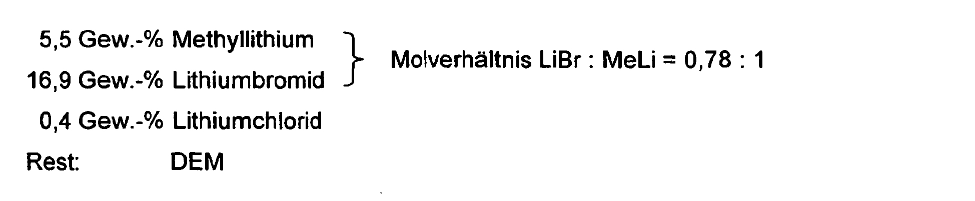

### Beispiel 2: Herstellung einer 4,3 %-igen Methyllithiumlösung mit einem LiBr : MeLi-Verhältnis von 0,93 : 1

Wie bei Beispiel 1 wurden 74,5 g einer bromidfreien, 8,0 %-igen Methyllithiumlösung in DEM , 23,7 g Lithiumbromid und 52 g wasserfreies DEM vermischt und zwei Stunden bei Raumtemperatur gerührt. Die klare, überstehende Phase wurde abdekantiert und wie folgt analysiert (mmol/g):

| Li⁺ | Br⁻ | Cl⁻ | Gesamtbase | molares Verhältnis LiBr : MeLi |
|---|---|---|---|---|
| 3,84 | 1,80 | 0,07 | 1,94 | 0,93 : 1 |

Daraus errechnet sich folgende Lösungszusammensetzung:

| | |
|---|---|
| 4,3 Gew.-% | MeLi |
| 15,6 Gew.% | LiBr |
| 0,3 Gew.% | LiCl |
| Rest: | DEM |

### Beispiel 3: Herstellung einer 5 %-igen Methyllithiumlösung mit einem LiBr : MeLi-Verhältnis von 1 durch Synthese aus Methylbromid und Lithiumpulver in DEM

In einem 800-ml-Doppelmantelreaktor wurden 11,5 g (1,66 mol) Lithiumpulver (0,5 % Na-Gehalt) in 250 g trockenem DEM (Wassergehalt 33 ppm) vorgelegt und unter Rühren auf 30 °C erwärmt.

Dann wurden innerhalb von 1,5 Stunden 78 g (0,82 mol) gasförmiges Methylbromid eingeleitet. Durch Gegenkühlen wurde die Innentemperatur zwischen 30 und 35 °C gehalten. Nach Dosierende wurde noch 1 Stunde bei 30 °C nachgerührt und die leicht trübe, wenig Lithiummetallreste enthaltende Lösung auf eine Glasfilterfritte (G3) abgelassen.

Das Filtrat war klar und leicht gelblich.
Auswaage: 307 g

### Analyse (mmol/g):

| Li⁺ | Br⁻ | Gesamtbase | Molverhältnis LiBr : MeLi |
|---|---|---|---|
| 4,52 | 2,20 | 2,31 | 0,95 : 1 |

### Produktzusammensetzung: 5,1 % MeLi, 19,1 % LiBr, Rest DEM

Daraus errechnet sich eine Produktausbeute von 86 %. Durch Ausspülen des Reaktors und Waschen des Filterrückstandes konnte die Ausbeute um weitere 5 % gesteigert werden.

### Beispiel 4: Herstellung einer 6,6 %-igen Methyllithiumlösung mit einem LiBr : MeLi-Verhältnis von 1 durch Synthese aus Methylbromid und Lithium-granulat in DEM

In derselben Apparatur wie in Beispiel 3 wurden 17,2 g (2,48 mol) Lithiummetallgranulat (Kantenlänge ca. 3 mm) in 250 g wasserfreiem DEM vorgelegt und unter Rühren auf 10 °C abgekühlt. Nach Erreichen dieser Temperatur wurden 106 g (1,125 mol) Methylbromidgas innerhalb 5,5 Stunden und bei Innentemperaturen zwischen 10 und 15 °C eingeleitet. Nach Dosierende wurde noch 2 Stunden bei Raumtemperatur gerührt und die Suspension dann auf eine D1-Glasfilterfritte abgelassen.
Auswaage: 362 g einer gelben, leicht trüben und viskosen Lösung

### Analyse (mmol/g):

| Li⁺ | Br⁻ | Gesamtbase | Molverhältnis LiBr : MeLi |
|---|---|---|---|
| 5,60 | 2,84 | 2,85 | 1:1,00 |

### Produktzusammensetzung: 6,3 % MeLi, 24,7 % LiBr, Rest DEM

Ausbeute: 92 % der Theorie

## Patentansprüche

1. Methyllithium und Lithiumbromid enthaltendes Synthesemittel, **dadurch gekennzeichnet, dass** in einem Lösemittel der allgemeinen Formel (I) 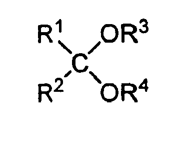 mit R¹, R² unabhängig voneinander = H, Me oder Et, sowie R³, R⁴ = Me oder Et,
Methyllithium und Lithiumbromid gelöst sind und das Molverhältnis von LiBr zu MeLi mindestens 0,7 und maximal 1,5 beträgt und die Methyllithiumkonzentration mindestens 4 Gew.-% beträgt.

2. Synthesemittel nach Anspruch 1, **dadurch gekennzeichnet, dass** das Molverhältnis von LiBr zu MeLi mindestens 0,8 beträgt.

3. Synthesemittel nach Anspruch 1, **dadurch gekennzeichnet, dass** das Molverhältnis von LiBr zu MeLi mindestens 1,0 beträgt.

4. Synthesemittel nach Anspruch einem der Ansprüche 1 bis 3, **dadurch gekennzeichnet, dass** das Synthesemittel 1 bis 40 Gew.-% eines oder mehrerer aromatischer Lösemittel enthält.

5. Synthesemittel nach Anspruch 4, **dadurch gekennzeichnet, dass** das aromatische Lösemittel einen oder mehrere der Stoffe Benzol, Toluol, Ethylbenzol, Xylol oder Cumol enthält.

6. Verfahren zur Herstellung eines Methyllithium (MeLi) und Lithiumbromid enthaltenden Synthesemittels in einem Lösemittel der allgemeinen Formel (1) 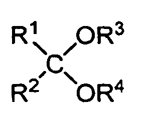 mit R¹, R² unabhängig voneinander = H, Me oder Et, sowie R³, R⁴ = Me oder Et,
**dadurch gekennzeichnet, dass** zu einer Lösung, die in einem Lösemittel der allgemeinen Formel (I) Methyllithium und Lithiumbromid in einem LiBr/MeLi-Molverhältnis von < 0,7 enthält, soviel Lithiumbromid zugegeben wird, dass ein LiBr/MeLi- Molverhältnis von mindestens 0,7 und maximal 1,5 erhalten wird, und wobei die Methyllithiumanfangskonzentration so bemessen ist, dass diese nach der Zugabe des Lithiumbromids mindestens 4 Gew.-% beträgt.

7. Verfahren zur Herstellung eines Methyllithium (MeLi) und Lithiumbromid enthaltenden Synthesemittels in einem Lösemittel der allgemeinen Formel (I) 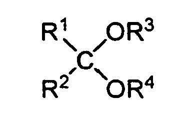 mit R¹, R² unabhängig voneinander = H, Me oder Et, sowie R³, R⁴ = Me oder Et,
**dadurch gekennzeichnet, dass** ein Methylhalogenid (M-Hal, mit Hal = Cl oder Br) mit Lithiummetall umgesetzt wird, wobei die Umsetzung in einem Lösemittel der Formel (I) durchgeführt wird und das Lithiumbromid bereits vor der Umsetzung dem Lösemittel zugegeben wird und die Einsatzmengen der Stoffe so gewählt werden, dass nach Reaktionsende die Konzentration an gelöstem Methyllithium mindestens 4 Gew.-% beträgt und das Molverhältnis von gelöstem LiBr zu gelöstem MeLi mindestens 0,7 und maximal 1,5 beträgt.

8. Verfahren nach Anspruch 7, **dadurch gekennzeichnet, dass** als Methylhalogenid Methylbromid eingesetzt wird.

9. Verfahren zur Herstellung eines Methyllithium (MeLi) und Lithiumbromid enthaltenden Synthesemittels in einem Lösemittel der allgemeinen Formel (1) 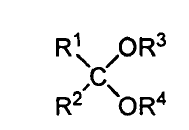 mit R¹, R² unabhängig voneinander = H, Me oder Et, sowie R³, R⁴ = Me oder Et,
**dadurch gekennzeichnet, dass** in dem Lösemittel der allgemeinen Formel (I) Methylbromid mit Lithiummetall umgesetzt wird, und die Einsatzmengen der Stoffe so gewählt werden, dass nach Reaktionsende die Konzentration an gelöstem Methyllithium mindestens 4 Gew.-% beträgt und das Molverhältnis von gelöstem LiBr zu gelöstem MeLi mindestens 0,7 und maximal 1,5 beträgt.

10. Verfahren nach einem der Ansprüche 7 bis 9, **dadurch gekennzeichnet, dass** das Lithiummetall in stückiger Form (Granulat) eingesetzt wird und die Lithiumstücke Kantenlängen von ≥ 1 mm aufweisen.

11. Verfahren nach Anspruch 10, **dadurch gekennzeichnet, dass** die Lithiumstücke Kantenlängen von 2 bis 3 mm aufweisen.

12. Verfahren nach einem der Ansprüche 8 bis 11, **dadurch gekennzeichnet, dass** das gelöste MeLi vom überschüssigen Metall abgetrennt wird.

13. Verfahren nach einem der Ansprüche 7 bis 12, **dadurch gekennzeichnet, dass** das Methylchlorid oder Methylbromid in einem Zeitraum von 1 bis 8 Stunden zudosiert wird.

14. Verfahren nach einem der Ansprüche 7 bis 13, **dadurch gekennzeichnet, dass** die Reaktionstemperatur im Bereich von 0 bis 50 °C gehalten wird.

## Claims

1. A synthesis agent containing methyllithium and lithium bromide, **characterised in that** methyllithium and lithium bromide are dissolved in a solvent of the general formula (I) 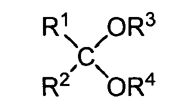 wherein R¹ and R² independently of one another are H, Me or Et, and R³ and R⁴ are Me or Et,
and the molar ratio of LiBr to MeLi is at least 0.7 and not more than 1.5, and the methyllithium concentration is at least 4 wt.%.

2. A synthesis agent according to claim 1, **characterised in that** the molar ratio of LiBr to MeLi is at least 0.8.

3. A synthesis agent according to claim 1, **characterised in that** the molar ratio of LiBr to MeLi is at least 1.0.

4. A synthesis agent according to any one of claims 1 to 3, **characterised in that** the synthesis agent comprises from 1 to 40 wt.% of one or more aromatic solvents.

5. A synthesis agent according to claim 4, **characterised in that** the aromatic solvent comprises one or more of the substances benzene, toluene, ethylbenzene, xylene or cumene.

6. A process for the preparation of a synthesis agent containing methyllithium (MeLi) and lithium bromide in a solvent of the general formula (I) 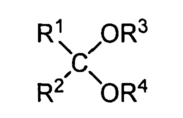 wherein R¹ and R² independently of one another are H, Me or Et, and R³ and R⁴ are Me or Et,
**characterised in that** to a solution containing methyllithium and lithium bromide in a LiBr/MeLi molar ratio of < 0.7 in a solvent of the general formula (I) there is added lithium bromide in an amount such that a LiBr/MeLi molar ratio of at least 0.7 and not more than 1.5 is obtained, the initial concentration of methyllithium being such that the concentration is at least 4 wt.% after addition of the lithium bromide.

7. A process for the preparation of a synthesis agent containing methyllithium (MeLi) and lithium bromide in a solvent of the general formula (I) 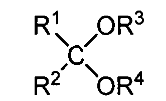 wherein R¹ and R² independently of one another are H, Me or Et, and R³ and R⁴ are Me or Et,
**characterised in that** a methyl halide (M-Hal, where Hal = Cl or Br) is reacted with lithium metal, the reaction being carried out in a solvent of formula (I) and the lithium bromide being added to the solvent before the reaction, and the amounts of the substances used being so chosen that, when the reaction is complete, the concentration of dissolved methyllithium is at least 4 wt.% and the molar ratio of dissolved LiBr to dissolved MeLi is at least 0.7 and not more than 1.5.

8. A process according to claim 7, **characterised in that** methyl bromide is used as the methyl halide.

9. A process for the preparation of a synthesis agent containing methyllithium (MeLi) and lithium bromide in a solvent of the general formula (I) 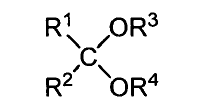 wherein R¹ and R² independently of one another are H, Me or Et, and R³ and R⁴ are Me or Et,
**characterised in that** methyl bromide is reacted with lithium metal in the solvent of the general formula (I), and the amounts of the substances used are so chosen that, when the reaction is complete, the concentration of dissolved methyllithium is at least 4 wt.% and the molar ratio of dissolved LiBr to dissolved MeLi is at least 0.7 and not more than 1.5.

10. A process according to any one of claims 7 to 9, **characterised in that** the lithium metal is used in the form of pieces (granules) and the lithium pieces have edge lengths of ≥ 1 mm.

11. A process according to claim 10, **characterised in that** the lithium pieces have edge lengths of from 2 to 3 mm:

12. A process according to any one of claims 8 to 11, **characterised in that** the excess metal is separated from the dissolved MeLi.

13. A process according to any one of claims 7 to 12, **characterised in that** the methyl chloride or methyl bromide is added in metered amounts over a period of from 1 to 8 hours.

14. A process according to any one of claims 7 to 13, **characterised in that** the reaction temperature is maintained in the range from 0 to 50°C.

## Revendications

1. Agent de synthèse contenant du méthyl-lithium et du bromure de lithium, **caractérisé en ce que** le méthyl-lithium et le bromure de lithium s'y trouvent dissous dans un solvant de formule générale (I) : 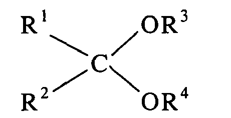 dans laquelle R¹ et R² représentent chacun, indépendamment l'un de l'autre, un atome d'hydrogène ou un groupe méthyle ou éthyle, et R³ et R⁴ représen-tent chacun un groupe méthyle ou éthyle,
le rapport molaire de LiBr à MeLi y vaut au moins 0,7 et au plus 1,5, et la concentration de méthyl-lithium y vaut au moins 4 % en poids.

2. Agent de synthèse conforme à la revendication 1, **caractérisé en ce que** le rapport molaire de LiBr à MeLi y vaut au moins 0,8.

3. Agent de synthèse conforme à la revendication 1, **caractérisé en ce que** le rapport molaire de LiBr à MeLi y vaut au moins 1,0.

4. Agent de synthèse conforme à l'une des revendications 1 à 3, **caractérisé en ce que** cet agent de synthèse contient 1 à 40 % en poids d'un ou de plusieurs solvant(s) aromatique(s).

5. Agent de synthèse conforme à la revendication 4, **caractérisé en ce que** le solvant aromatique contient l'un ou plusieurs des suivants : benzène, toluène, éthyl-benzène, xylène et cumène.

6. Procédé de préparation d'un agent de synthèse contenant du méthyl-lithium (MeLi) et du bromure de lithium, dans un solvant de formule générale (I) : 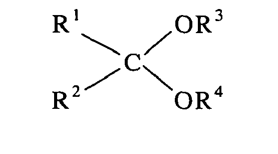 dans laquelle R¹ et R² représentent chacun, indépendamment l'un de l'autre, un atome d'hydrogène ou un groupe méthyle ou éthyle, et R³ et R⁴ représen-tent chacun un groupe méthyle ou éthyle,
**caractérisé en ce que**, à une solution qui contient, dans un solvant de formule générale (I), du méthyl-lithium et du bromure de lithium en un rapport molaire LiBr/MeLi inférieur à 0,7, on ajoute du bromure de lithium en une quantité telle que l'on obtient, pour ce rapport molaire LiBr/MeLi, une valeur d'au moins 0,7 et d'au plus 1,5, la concentration de méthyl-lithium ayant initialement une valeur telle que, après l'addition de bromure de lithium, cette concentration vaille au moins 4 % en poids.

7. Procédé de préparation d'un agent de synthèse contenant du méthyl-lithium (MeLi) et du bromure de lithium, dans un solvant de formule générale (I) : 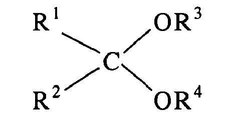 dans laquelle R¹ et R² représentent chacun, indépendamment l'un de l'autre, un atome d'hydrogène ou un groupe méthyle ou éthyle, et R³ et R⁴ représen-tent chacun un groupe méthyle ou éthyle,
**caractérisé en ce qu'**on fait réagir avec du lithium métallique un halogénure de méthyle (de formule Me-Hal où Hal représente un atome de chlore ou de brome), cette réaction étant effectuée dans un solvant de formule (I) et le bromure de lithium ayant déjà été ajouté au solvant avant la réaction,
et les quantités des diverses matières mises en jeu étant choisies de manière à ce que, une fois la réaction terminée, la concentration de méthyl-lithium dissous vaille au moins 4 % en poids et le rapport molaire du bromure de lithium dissous au méthyl-lithium dissous vaille au moins 0,7 et au plus 1,5.

8. Procédé conforme à la revendication 7, **caractérisé en ce que** l'on emploie du bromure de méthyle en tant qu'halogénure de méthyle.

9. Procédé de préparation d'un agent de synthèse contenant du méthyl-lithium (MeLi) et du bromure de lithium, dans un solvant de formule générale (I) : 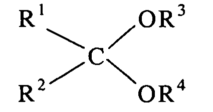 dans laquelle R¹ et R² représentent chacun, indépendamment l'un de l'autre, un atome d'hydrogène ou un groupe méthyle ou éthyle, et R³ et R⁴ représen-tent chacun un groupe méthyle ou éthyle,
**caractérisé en ce qu'**on fait réagir du bromure de méthyle avec du lithium métallique dans le solvant de formule générale (I), et **en ce que** les quantités des diverses matières mises en jeu sont choisies de manière à ce que, une fois la réaction terminée, la concentration de méthyl-lithium dissous vaille au moins 4 % en poids et le rapport molaire du bromure de lithium dissous au méthyl-lithium dissous vaille au moins 0,7 et au plus 1,5.

10. Procédé conforme à l'une des revendications 7 à 9, **caractérisé en ce que** l'on utilise du lithium métallique en morceaux (granulat), lesquels morceaux de lithium ont des arêtes de plus de 1 mm de long.

11. Procédé conforme à la revendication 10, **caractérisé en ce que** les morceaux de lithium ont des arêtes de 2 à 3 mm de long.

12. Procédé conforme à l'une des revendications 8 à 11, **caractérisé en ce que** l'on sépare le méthyl-lithium dissous du métal en excès.

13. Procédé conforme à l'une des revendications 7 à 12, **caractérisé en ce que** l'on ajoute la quantité appropriée de chlorure de méthyle ou de bromure de méthyle en un laps de temps de 1 à 8 heures.

14. Procédé conforme à l'une des revendications 7 à 12, **caractérisé en ce que** l'on maintient la température de réaction dans l'intervalle allant de 0 à 50 °C.
